Europäisches Patentamt

European Patent Office

Office européen des brevets

(19)

(11) Veröffentlichungsnummer: **0 380 771**
**A1**

# (12) EUROPÄISCHE PATENTANMELDUNG

(21) Anmeldenummer: **89121068.4**

(22) Anmeldetag: **14.11.89**

(51) Int. Cl.⁵: **B23P 13/00, B23G 1/34**

(30) Priorität: **31.01.89 DE 3902740**

(43) Veröffentlichungstag der Anmeldung:
**08.08.90 Patentblatt 90/32**

(84) Benannte Vertragsstaaten:
**AT FR GB**

(71) Anmelder: **LINSINGER MASCHINENBAU GMBH**
**Dr. Linsingerstrasse 24**
**A-4662 Steyrermühl(AT)**

(72) Erfinder: **Anreiter, Alois**
**Graben 14**
**A-4690 Schwanenstadt(AT)**

(74) Vertreter: **Hafner, Dieter, Dr.rer.nat.,**
**Dipl.-Phys.**
**Ostendstrasse 132**
**D-8500 Nürnberg 30(DE)**

(54) **Verfahren und Vorrichtung zum Herstellen von Statoren, insbesondere langgestreckten Statoren, für Exzenterwellen-Pumpen oder -Motoren.**

(57) Bei dem neuen Verfahren zum Herstellen von insbesondere langen Statoren für Exzenterwellen-Pumpen oder -Motoren mittels zerspanender Bearbeitung, wobei diese Statoren in Richtung ihrer Längsachse jeweils mit einem zwei-oder mehrgängigen Innenlochprofil versehen werden, das sich periodisch wiederholende Profilflanken mit vorgegebener Steigung als innere Statorarbeitsflächen aufweist, ist der Ablauf folgender Verfahrensschritte vorgesehen:

a) An stangenartigen Werkstücken werden jeweils Teilsegmente des Innenlochprofils als äußere Bearbeitungsflächen mittels zerspanender Bearbeitung erzeugt;

b) die Werkstücke werden sodann in Richtung ihrer Längsachsen jeweils in eine vorgegebene Anzahl von Teilwerkstücken in der Weise zerteilt, daß jedes Teilwerkstück ein Teilsegment des Innenlochprofils aufweist und

c) diese Teilwerkstücke werden anschließend so miteinander zusammengesetzt, daß sich die Teilsegmente zu dem kompletten Innenlochprofil ergänzen.

Eine Vorrichtung zur Durchführung dieses Verfahrens weist z. B. im wesentlichen eine Wirbelmaschine (8) mit einer Fräseinheit (F) auf, die mit einem Profilfräser (4) zum Erzeugen der Teilsegmente in Form von äußeren Bearbeitungsflächen der Werkstücke (3″) bestückt ist.

FIG. 8

## Verfahren und Vorrichtung zum Herstellen von Statoren, insbesondere langgestreckten Statoren, für Exzenterwellen-Pumpen oder - Motoren

Die Erfindung betrifft ein Verfahren mit den Merkmalen des Oberbegriffes des Patentanspruches 1.

Ferner betrifft die Erfindung eine Vorrichtung mit den Merkmalen des Oberbegriffes des Patentanspruches 14, insbesondere zur Durchführung des Verfahrens nach der Erfindung.

Ein bekanntes Verfahren zum Herstellen von Statoren für Exzenterwellen-Pumpen oder -Motoren besteht beispielsweise darin, daß mit Hilfe einer spanlosen Formgebung die Statoren und damit deren inneren Statorarbeitsflächen aus elastischem Gummi oder aus Kunststoff gefertigt werden, beispielsweise durch Kautschukgießverfahren. Die aus einem derartigen Fertigungsprozeß resultierenden Statoren besitzen jedoch den Nachteil, daß sie nur in einem begrenzten Temperaturbereich in der Praxis eingesetzt werden können, wobei der jeweilige Temperaturbereich durch das Kunststoffmaterial bestimmt wird.

Darüber hinaus sind aber auch Verfahren zur Herstellung von Statoren bekannt, bei denen von zerspanenden Technologien Gebrauch gemacht wird, so daß dann auch Statoren gefertigt werden können, die insbesondere in Pumpen oder Motoren eingebaut werden, bei denen in höheren Temperaturbereichen gearbeitet wird.

Derartige bekannte, zerspanende Bearbeitungsverfahren bestehen beispielsweise in einem sog. Innen-Unrund-Kopierdrehverfahren, wobei insbesondere mit Hilfe von Bohrstangen oder Ausdrehstäben das Innenlochprofil des Stators in Form von inneren, zerspanten Bearbeitungsflächen erzeugt wird. Die Bearbeitungstiefe solcher Kopierdrehverfahren ist jedoch relativ begrenzt, d.h., es gilt im allgemeinen für die resultierenden Statoren eine Längenbegrenzung gemäß der Formel:

$$L \leq 15\ D,$$

worin L die Länge des Statorprofils und D den Durchmesser des Innenlochprofils bedeuten.

Die bekannten Kopierdrehverfahren erlauben somit lediglich die Herstellung von Innenlochprofilen mit verhältnismäßig begrenzten Längen, was natürlich in der Praxis als recht nachteilig empfunden wird. Weitere Nachteile sind ungünstige Schnittbedingungen, geringe Bearbeitungsgeschwindigkeiten, ungleichmäßige zerspanende Bearbeitungen und dgl. mehr.

Zur Überwindung dieser Schwierigkeiten ist beim Stand der Technik auch dazu bereits übergegangen worden, die Statoren in Form von mehreren, einzelnen, kürzeren Längsstücken herzustellen und diese einzelnen Längsstücke anschließend axial zusammenzusetzen, da in der Praxis z.B. oftmals ein Bedarf an Exzenterwellen-Pumpen besteht, deren aktiven Pumpenlängen unter Umständen mehrere Meter lang sein müssen, um hierdurch die Forderung nach bestimmten Förder- und Leistungsparametern erfüllen zu können.

Bei dem zuletzt geschilderten Herstellungsverfahren besteht jedoch ein schwerwiegendes Problem in der Bearbeitung der Übergangsflächen des Stator-Innenlochprofils, da diese Übergangsflächen mit Werkzeugen kaum erreichbar sind. Hierdurch sind jedoch ungenaue Passungen bedingt, wodurch Standzeiten- und Leistungsverminderungen hervorgerufen werden können.

Außerordentlich schwer zugänglich sind hierbei insbesondere die zu bearbeitenden Innenstoßflächen eines Stators, so daß, wenn derartige Statoren unter Anwendung üblicher zerspanender Bearbeitungstechnologie hergestellt werden sollen, dazu übergegangen werden müßte, den Stator aus einer großen Anzahl von relativ dünnen Scheiben zusammenzusetzen, bei welchen sich die Innenstoßflächen noch relativ gut bearbeiten lassen, wobei jedoch ein derartiges Verfahren in der Praxis sehr unwirtschaftlich ist, da hierbei in der Regel eine größere Anzahl von Einzelwerkstücken gesondert bearbeitet werden muß und diese Einzelwerkstücke anschließend zusammengesetzt werden müssen.

Der Erfindung liegt daher die Aufgabe zugrunde, ein verbessertes Verfahren zum Herstellen von Statoren für Exzenterwellen-Pumpen oder -Motoren mittels zerspanender Bearbeitung zu schaffen, derart, daß mit Hilfe dieses neuen Verfahrens auch relativ lange Werkstückdimensionen sehr genau bearbeitet werden können, wobei sich dieses Herstellungsverfahren aber auch durch eine sehr hohe Wirtschaftlichkeit, d.h. Kostengünstigkeit auszeichnen soll.

Ausgehend von einem Verfahren mit den Merkmalen des Oberbegriffes des Patentanspruches 1 wird die vorgenannte Aufgabe gemäß der Erfindung durch den Ablauf der folgenden Verfahrensschritte gelöst:
- An stangenartigen Werkstücken werden jeweils Teilsegmente des zu bildenden Innenlochprofils des Stators als äußere Bearbeitungsflächen mittels zerspanender Bearbeitung erzeugt,
- die Werkstücke werden sodann in Richtung ihrer Längsachsen jeweils in eine vorgegebene Anzahl von Teilwerkstücken in der Weise zerteilt, daß jedes Teilwerkstück ein Teilsegment des Innenlochprofils aufweist, und
- diese Teilwerkstücke werden anschließend so miteinander zusammengesetzt, daß sich die Teilsegmente zu dem kompletten Innenlochprofil des Stators ergänzen.

Dieses erfindungsgemäße Verfahren besitzt insbesondere den Vorteil, daß praktisch Längenbegrenzungen völlig wegfallen, wobei sich ein solches Verfahren aber auch wesentlich wirtschaftlicher realisieren läßt als die Verfahren nach dem Stand der Technik, ganz abgesehen davon, daß das erfindungsgemäße Verfahren hinsichtlich der Qualität der resultierenden inneren Statorarbeitsflächen zu hervorragenden Ergebnissen führt, was letztendlich aber auch für die Leistungsfähigkeit und die Standzeit von Exzenterwellen-Pumpen oder -Motoren, in denen die Statoren eingebaut werden, von ausschlaggebender Bedeutung ist.

Darüber hinaus erlaubt das erfindungsgemäße Verfahren aber auch in relativ einfacher Weise die Herstellung von Statoren mit mehrgängigen Innenlochprofilen, wobei sich die Mehrgängigkeit insbesondere auf Profile mit mehr als zwei Gängen bezieht, was nach dem Stand der Technik entweder überhaupt nicht oder nur unter außerordentlichen fertigungstechnischen Schwierigkeiten möglich ist.

Ferner werden durch das erfindungsgemäße Verfahren in zerspantechnologischer Hinsicht außerordentlich günstige Bedingungen geschaffen, wodurch vor allen Dingen hohe Bearbeitungsgeschwindigkeiten und eine leichte Nachbearbeitbarkeit der resultierenden Produkte gewährleistet sind.

Die inneren Statorarbeitsflächen können schließlich in sehr präziser Weise durch zerspanende Bearbeitung erzeugt werden, was einen nicht zu unterschätzenden Vorzug des erfindungsgemäßen Verfahrens darstellt, da diese Statorarbeitsflächen die Rotor-Kontaktflächen bilden, d.h. also z.B. im Falle einer Exzenterwellen-Pumpe praktisch die Pumpenarbeitsflächen, wobei die Erzielung einer hohen Dichtung zwischen Stator und Rotor von außerordentlicher Wichtigkeit ist.

Weitere, sehr vorteilhafte Verfahrensausgestaltungen ergeben sich aus den Ansprüchen 2 - 12.

Gemäß dem Oberbegriff des Anspruchs 13 bezieht sich die vorliegende Erfindung auch auf ein Verfahren zum Herstellen von Exzenterwellen-Pumpen oder -Motoren unter Verwendung von Statoren, die nach dem erfindungsgemäßen Verfahren hergestellt werden, sowie unter Verwendung von entsprechenden, zwei- oder mehrgängigen Rotoren, wobei diese Statoren und Rotoren über ihre jeweiligen Längserstreckungen vorzugsweise sich kontinuierlich ändernde Steigungen aufweisen sollen. Die erfindungsgemäßen Verfahrensmaßnahmen sind im kennzeichnenden Teil des Anspruches 13 angegeben.

Hierdurch kann jetzt auch einem bereits seit langem gehegten Wunsch der Pumpenhersteller nachgekommen werden, da es jetzt möglich ist, Statoren mit in Richtung deren Längsachse gesehen unterschiedlichen Steigungen zu fertigen, die mit entsprechend hergestellten Rotoren zusammengebaut werden können.

Der vorliegenden Erfindung liegt darüber hinaus die Aufgabe zugrunde, eine verbesserte Vorrichtung zum Herstellen von Statoren, insbesondere langgestreckten Statoren für Exzenterwellen-Pumpen oder -Motoren mittels zerspanender Bearbeitung, mit den Merkmalen des Oberbegriffs des Patentanspruches 14 zu schaffen, insbesondere eine Vorrichtung zur Durchführung des Herstellungsverfahrens nach der Erfindung.

Diese Vorrichtung ist erfindungsgemäß durch die Kombination der im kennzeichnenden Teil des Anspruches 14 angegebenen Merkmale charakterisiert.

Vorteilhafte Weiterbildungen der erfindungsgemäßen Vorrichtung ergeben sich aus den Ansprüchen 15 - 20.

Mit Hilfe der erfindungsgemäßen Vorrichtung ist es erstmalig möglich, ohne größeren steuerungstechnischen Auf wand Statoren mit Innenlochprofil und mit praktisch beliebiger Längserstreckung durch zerspanende Bearbeitung herzustellen, vorzugsweise auch Statoren mit n-gängigem Innenlochprofil und/oder mit über die Längserstreckung unterschiedlicher Steigung der Profilflanken des Innenlochprofils.

Insbesondere zeichnet sich die erfindungsgemäße Vorrichtung auch durch einfache konstruktive Mittel hinsichtlich der Auslegung der Wirbelmaschine mit Fräseinheit aus, wobei die Gesamtausgestaltung dieser Vorrichtung in einfacher und kostengünstiger Weise gewährleistet ist.

Die Erfindung ist nachstehend im Rahmen von Ausführungsbeispielen anhand der Zeichnungsfiguren erläutert. Dabei zeigt:

Fig. 1 schematisch eine Seitenansicht eines Stators für Exzenterwellen-Pumpen oder -Motoren;

Fig. 2 in der Reihenfolge von oben nach unten einmal eine stirnseitige Ansicht des Stators gem. Fig. 1 in Richtung des Pfeiles Pf sowie drei aufeinanderfolgende Stator-Schnittansichten in Ebenen A-A, B-B und C-C gemäß Fig. 1;

Fig. 3 schematisch eine quadratische Querschnittsfläche eines stangenartigen Werkstückes, welches nach dem erfindungsgemäßen Verfahren bearbeitet wird;

Fig. 4 eine der Fig. 3 entsprechende Ansicht eines weiteren Werkstückes bzw. dessen quadratische Querschnittsfläche;

Fig. 5 eine schematische Stirnansicht eines nach dem erfindungsgemäßen Verfahren hergestellten Stators;

Fig. 6 ein weiteres Ausführungsbeispiel eines Werkstückes, welches zur Herstellung eines Stators nach dem erfindungsgemäßen Verfahren einer zerspanenden Bearbeitung unterworfen wird, wobei dieses Werkstück primär nunmehr einen kreisrunden Querschnitt hat;

Fig. 7 schematisch eine Seitenansicht einer Vorrichtung zum Herstellen von Statoren für Exzenterwellen-Pumpen oder -Motoren mittels zerspanender Bearbeitung; und

Fig. 8 eine Ansicht der Vorrichtung gem. Fig. 7 im Bereich zwischen den beiden Vertikalebenen $Z_1$ und $Z_2$ gem. Fig. 7.

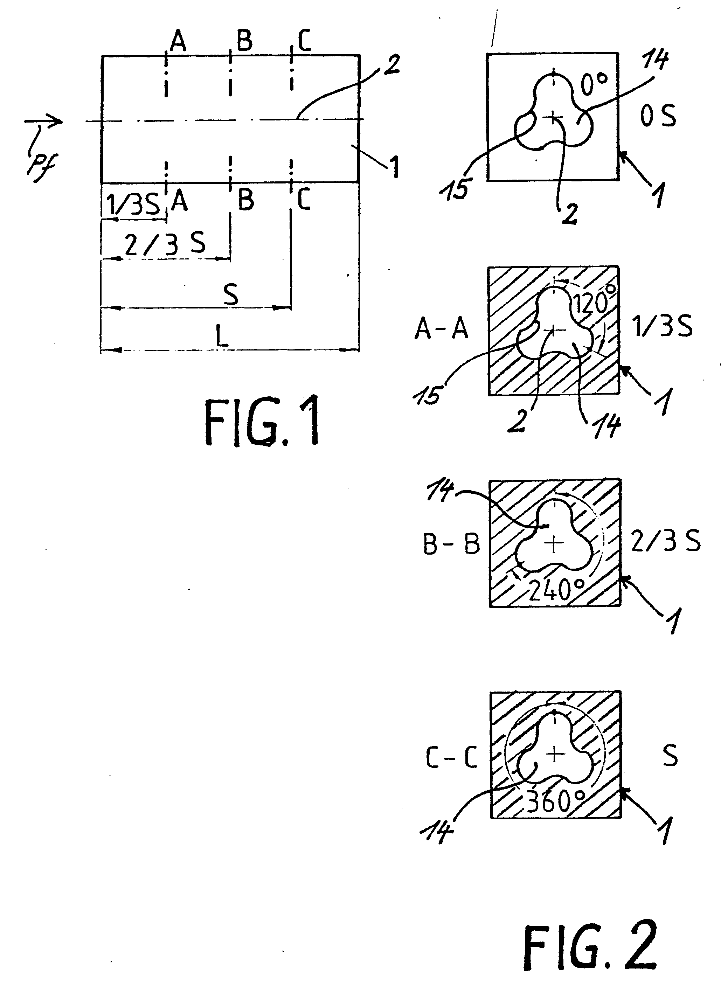

Aus Fig. 1 ist ein Stator 1 für eine Exzenterwellen-Pumpe in einer schematischen Seitenansicht ersichtlich, wobei dieser Stator 1 in Richtung einer Profillängsachse 2 ein dreigängiges Innenlochprofil 14 aufweist, dessen drei sich periodisch wiederholenden Profilflanken 15 im einzelnen aus der Fig. 2 hervorgehen. Die Länge dieses Stators 1 und somit auch seines Innenlochprofils 14 ist in der Fig. 1 mit L bezeichnet.

Weiterhin ergibt sich aus den Fig. 1 und 2, daß die Profilflanken 15 des Stators 1 eine vorgegebene Steigung S aufweisen.

In der Fig. 2 zeigt das oberste Bild eine frontseitige Ansicht des Stators 1 in Richtung des Pfeiles Pf gem. Fig. 1, wobei der in dieser Ebene liegende Querschnitt des Innenlochprofils 14, welcher durch die Position $0°$ entsprechend dem Beginn des Innenlochprofils 14 definiert ist, durch die Angabe "O S" gekennzeichnet ist.

Das darunterliegende Bild gem. Fig. 2 zeigt eine Schnittansicht in der Ebene A-A gem. Fig. 1, wobei nunmehr der Querschnitt des Innenlochprofils 14 nach dessen Verdrehung um $120°$ dargestellt ist, entsprechend einer ersten Phase der Steigung von "1/3 S".

Das darunter folgende Bild zeigt eine Schnittansicht durch den Stator 1 in der Ebene B-B gem. Fig. 1, mit einer Querschnittsdarstellung des Innenlochprofils 14, das in dieser Position eine Verdrehung um $240°$ erfahren hat, was einer nunmehr erreichten Steigungsphase von "2/3 S" entspricht.

Schließlich zeigt das unterste Bild gem. Fig. 2 eine Schnittansicht in der Ebene C-C gem. Fig. 1, wobei nunmehr der Querschnitt des Innenlochprofiles 14 in seiner Phase der vollständigen Verdrehung um $360°$ dargestellt ist, d.h., das Innenlochprofil 14 ist in dieser Position durch die nunmehr vollständig erreichte Steigung "S" charakterisiert.

Die Profilflanken 15 des Innenlochprofiles 14 bilden die inneren Statorarbeitsflächen, die als Kontaktflächen mit Oberflächen eines entsprechenden Profils eines hier nicht dargestellten Rotors der Exzenterwellen-Pumpe zusammenwirken.

In der Praxis kann die Anzahl der Gänge des Innenlochprofiles 14 vorzugsweise zwischen zwei und zwölf liegen, jedoch sind im Prinzip n Gänge denkbar.

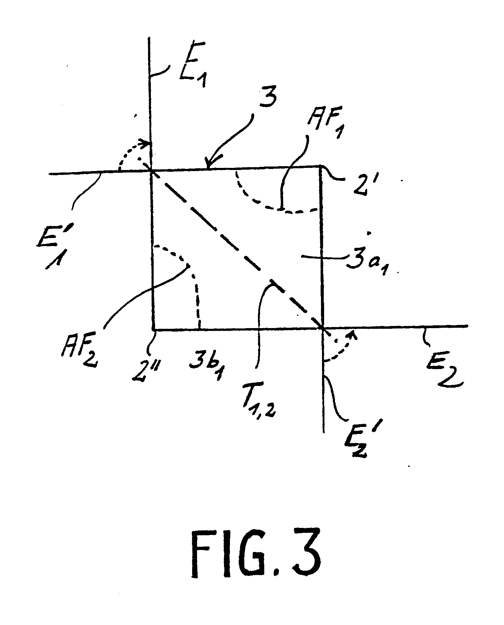

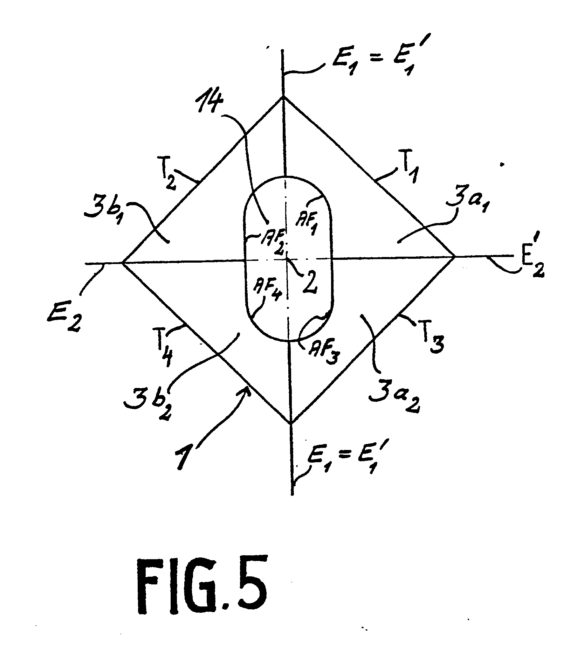

Anhand der Fig. 3 - 5 wird nunmehr das Prinzip des erfindungsgemäßen Verfahrens zum Herstellen eines Stators mit einem zweigängigen Innenlochprofil erläutert, dessen Querschnitt sich aus der Fig. 5 ergibt.

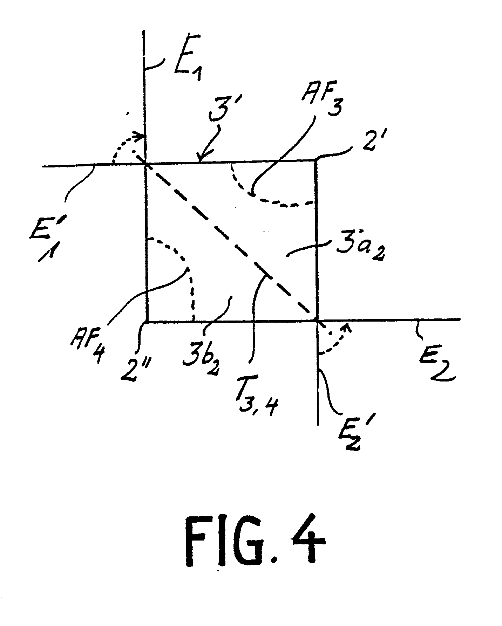

Es wird zunächst angenommen, daß für das Herstellungsverfahren langgestreckte, stangenartige Werkstücke 3, 3′ mit jeweils quadratischem Querschnitt bereitgestellt werden, wie dies im einzelnen aus den Fig. 3 und 4 zu ersehen ist, wobei sodann diese Werkstücke 3,3′ in Übereinstimmung mit dem erfindungsgemäßen Verfahren einer zerspanenden Bearbeitung unterworfen werden.

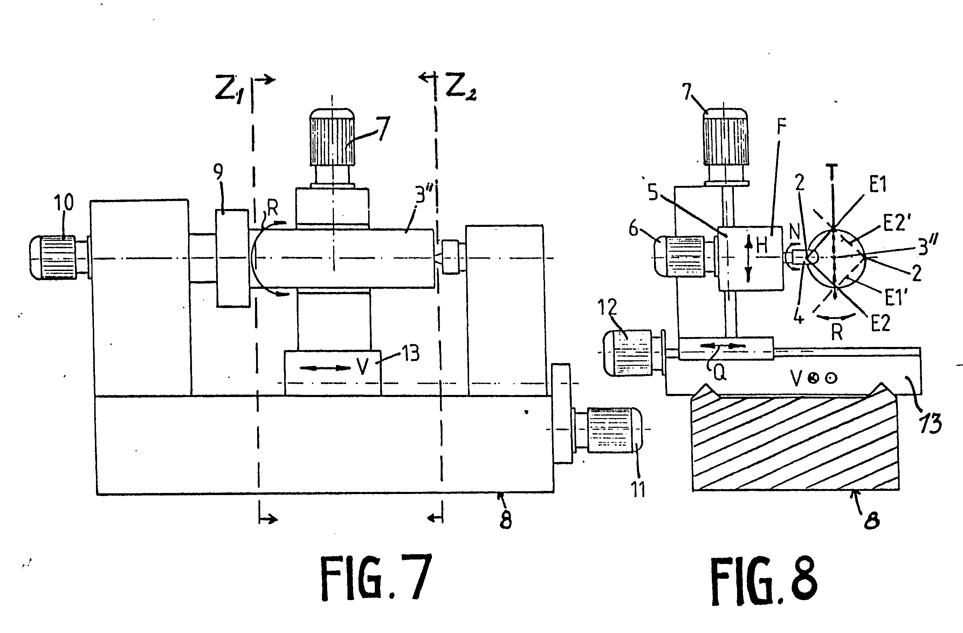

Hierbei werden zunächst an dem Werkstück 3 gem. Fig. 3 Teilsegmente des zu bildenden Innenlochprofiles 14 gem. Fig. 5 als äußere Bearbeitungsflächen $AF_1$ und $AF_2$ erzeugt, wobei diese Teilsegmente an einander gegenüberliegenden Oberflächenbereichen bzw. Kantenbereichen des Werkstückes 3 ausgebildet werden. In entsprechender Weise wird auch ein Werkstück 3′ gem. Fig. 4 bearbeitet, d.h., auch an diesem Werkstück 3′ werden Teilsegmente des Innenlochprofiles 14 als äußere Bearbeitungsflächen $AF_3$ und $AF_4$ erzeugt. Die zerspanende Bearbeitung der Werkstücke 3 und 3′ erfolgt mittels eines Profilfräsers innerhalb einer Wirbelmaschine, wie diese weiter unten anhand der Fig. 7 und 8 noch näher erläutert wird.

Wenn nun an den beiden Werkstücken 3 und 3′ alle vier Teilsegmente $AF_1$ ... $AF_4$ fertiggestellt sind, dann wird zunächst das Werkstück 3 gem. Fig. 3 in Richtung seiner Längsachse in zwei gleiche, symmetrische Teilwerkstücke $3a_1$ und $3b_1$ zerteilt, in entsprechender Weise wird das Werkstück 3′ gem. Fig. 4 in Richtung seiner Längsachse ebenfalls in zwei gleiche, zueinander symmetrische Teilwerkstücke $3a_2$ und $3b_2$ zerteilt.

Diese jeweiligen Werkstückteilungen erfolgen nach Maßgabe von vorgegebenen Trennebenen $T_{1,2}$ (Fig.3) und $T_{3,4}$ (Fig. 4), wobei diese Trennebenen jeweils entlang der Längsachse der Werkstücke 3,3′ verlaufen.

Insbesondere handelt es sich bei den Trennebenen $T_{1,2}$ und $T_{3,4}$ jeweils um diagonal verlaufende Ebenen im Bereich zwischen denjenigen Werkstücklängskanten, an denen keine zerspanende Bearbeitung erfolgt, d.h., an denen keine Teilsegmente des Innenlochprofils erzeugt sind.

Durch diese Zerteilungen der Werkstücke 3 und 3′ nach Maßgabe der jeweiligen Trennebenen $T_{1,2}$ und $T_{3,4}$ ergeben sich aus den bearbeiteten Werkstücken insgesamt vier Teilwerkstücke $3a_1$, $3b_1$, $3a_2$ und $3b_2$, wobei sodann jedes einzelne Teilwerkstück ein Teilsegment Innenlochprofils 14 gemäß Fig. 5 aufweist, d. h. das Teilwerkstück $3a_1$ das Teilsegment $AF_1$, das Teilwerkstück $3b_1$ das Teilsegment $AF_2$, das Teilwerkstück $3a_2$ das Teilsegment $AF_3$ und schließlich das Teilwerkstück $3b_2$ das Teilsegment $AF_4$. In einem darauf folgenden Verfahrensschritt werden die oben erläuterten Teilwerkstücke in der Weise miteinander zusammengesetzt, daß sich der in der Fig. 5 dargestellte Stator 1 ergibt, bei welchem nunmehr die Teilsegmente zu dessen komplettem Innenlochprofil 14 ergänzt sind.

Dieser Verfahrensschritt des Zusammensetzens wird insbesondere in der Weise vorgenommen, daß die Ebenen, in denen jeweils die ursprünglichen vier Außenoberflächen der Werkstücke 3 und 3' liegen und die in Fig. 3 und 4 mit einer ersten Ebene $E_1$, einer hierzu senkrecht verlaufenden zweiten Ebene $E'_1$, einer zu dieser parallel verlaufenden, dritten Ebene $E_2$ und schließlich mit einer zur letzteren senkrecht verlaufenden, vierten Ebene $E'_2$ bezeichnet sind, nunmehr die Ebenen des gegenseitigen Zusammenfügens der vier Teilwerkstücke $3a_1$, $3b_1$, $3a_2$, $3b_2$ bilden, wie sich dies aus Fig. 5 ersehen läßt. In diesem Montagezustand des Stators 1 ist die erste Ebene $E_1$ identisch mit der zweiten Ebene $E'_1$, d. h., diese bilden nunmehr eine gemeinsame Ebene, und in entsprechender Weise bilden auch die dritten und vierten Ebenen $E_2$ und $E'_2$ nunmehr eine gemeinsame Ebene, wobei sich die Ebenen $E_1$, $E'_1$ und $E_2$, $E'_2$ in der resultierenden Profillängsachse 2 des Innenlochprofils 14 des Stators 1 schneiden. Somit kommen also die ursprünglichen, äußeren Längskanten 2' und 2'' der Werkstücke 3 und 3' an einander gegenüberliegenden Kantenbereichen, an denen sodann die Teilsegmente $AF_1$ bis $AF_4$ erzeugt werden, jeweils beim fertigen Stator 1 gemäß Fig. 5 quasi koinzidierend in dessen Profillängsachse 2 zu liegen.

Gleichzeitig bilden sodann die ursprünglichen Trennebenen der beiden Werkstücke 3 und 3' die äußeren Oberflächen des Stators 1 mit quadratischem Querschnitt, derart, daß jetzt die erste Trennebene $T_1$ die äußere Oberfläche des ersten Teilwerkstückes $3a_1$, die zweite Trennebene $T_2$ die äußere Oberfläche des zweiten Teilwerkstückes $3b_1$, die dritte Trennebene $T_3$ die äußere Oberfläche des dritten Teilwerkstückes $3a_2$ und schließlich die vierte Trennebene $T_4$ die Oberfläche des vierten Teilwerkstückes $3b_2$ ergeben.

Der Verfahrensschritt des Zusammensetzens der Teilwerkstücke zum kompletten Stator 1 gemäß Fig. 5 wird, wie dies hier im einzelnen nicht dargestellt ist, noch dadurch vervollständigt, daß die Teilwerkstücke $3a_1$, $3b_2$, $3a_2$ und $3b_1$ an den einander anliegenden Flächen, d. h., in den jeweiligen Ebenen $E_1$, $E'_1$, $E_2$ und $E'_2$ mechanisch miteinander verspannt werden, beispielsweise mit Hilfe von entsprechenden Positionierzapfen, und daß anschließend eine gegenseitige Verbindung dieser Teilwerkstücke erfolgt, vorzugsweise in der Art einer lösbaren Verbindung, etwa mittels gegenseitigem Verschrauben.

Auf jeden Fall ergibt sich gemäß Fig. 5 das vollständige Innenlochprofil 14 des Stators 1 aus den einzelnen Teilsegmenten $AF_1$ bis $AF_4$, die im ersten Verfahrensschritt als äußere Bearbeitungsflächen erzeugt werden.

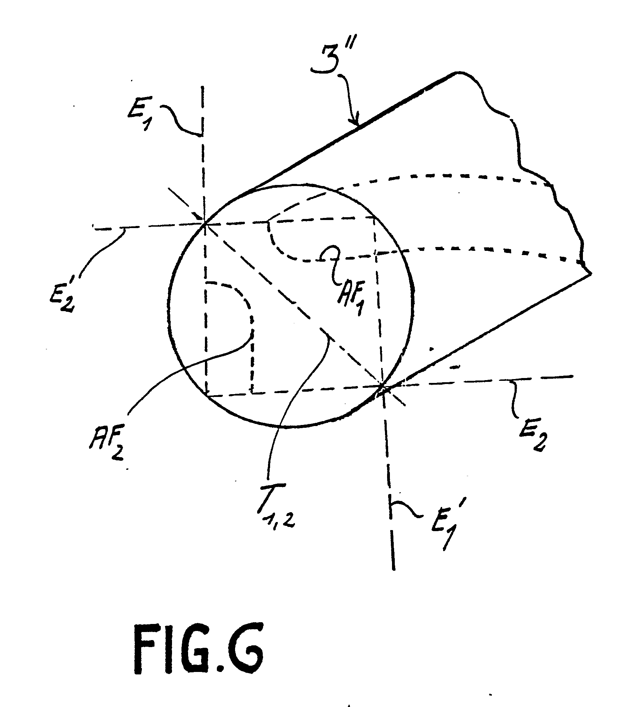

Während weiter oben vorausgesetzt wurde, daß von langgestreckten stangenartigen Werkstücken mit quadratischem Querschnitt für die Bearbeitung ausgegangen wird, so besteht als Alternative hierzu auch die Möglichkeit, primär Werkstücke mit kreisrundem oder quasi kreisrundem Querschnitt zu bearbeiten, wie dies anhand der Fig. 6 beispielsweise erläutert wird.

Fig. 6 zeigt schematisch einen Teilabschnitt eines stangenartigen Werkstückes 3'', an welchem, in entsprechender Weise, wie dies anhand der Figuren 3 und 4 erläutert ist, Teilsegmente des zu bildenden Innenlochprofils des Stators als äußere Bearbeitungsflächen erzeugt werden, wobei es jedoch in diesem Fall noch erforderlich ist, daß gleichzeitig mit der oder im Anschluß an die Erzeugung dieser Teilsegmente $AF_1$ usw. an dem Werkstück 3'' noch weitere abtragende Bearbeitungen mit dem Ziel durchgeführt werden, die restlichen Außenoberflächen des Werkstücks 3'' jeweils eben auszubilden, wie dies in der Fig. 6 durch gestrichelte Linien angedeutet ist.

Es müssen somit wiederum Außenoberflächen des Werkstücks 3'' erzeugt werden, die entsprechend den Werkstücken 3 und 3' mit ursprünglich quadratischem Querschnitt gemäß Figuren 3 und 4 jeweils wiederum in Ebenen $E_1$, $E'_1$, $E_2$ und $E'_2$ liegen, wie dies ebenfalls in der Fig. 6 angedeutet ist.

Die sich daran anschließenden, weiteren Bearbeitungsschritte sind die gleichen, wie bereits oben anhand der Figuren 3 - 5 im einzelen erläutert.

Unter Bezugnahme auf die Fig. 5 wird noch darauf hingewiesen, daß im Rahmen des erfindungsgemäßen Verfahrens ergänzend die Möglichkeit besteht, nach dem Zusammensetzen von beispielsweise drei Teilwerkstücken $3a_1$, $3b_1$ und $3a_2$ und zunächst unter Weglassung des vierten Teilwerkstückes $3b_2$ die nunmehr durch die drei Teilsegmente $AF_1$, $AF_2$ und $AF_3$ gebildete, noch frei zugängliche, teilweise Statorarbeitsfläche des Innenlochprofils 14 über ihre gesamte Länge nachzubearbeiten, wobei dieser Nachbearbeitungsschritt ein Oberflächen-Finish der inneren Statorarbeitsfläche darstellt. In entsprechender Weise kann natürlich auch ein derartiges Oberflächen-Finish nach dem Zusammensetzen von nur jeweils zwei Teilwerkstücken erfolgen, so daß z. B. einerseits die Teilsegmente $AF_1$ und $AF_3$ der Statorarbeitsfläche nachbearbeitet werden, und andererseits auch die Teilsegmente $AF_2$ und $AF_4$, sofern die zugehörigen Teilwerkstücke miteinander zusammengesetzt sind.

Um eine vollständige Exzenterwellen-Pumpe oder einen Exzenterwellen-Motor beispielsweise unter Verwendung eines Stators 1 gemäß Fig. 5 herzustellen (es versteht sich, daß hierzu noch ein entsprechender, eingängiger Rotor gehört), kann in der Weise vorgegangen werden, daß die einzelnen Teilwerkstücke $3a_1$, $3b_1$, $3a_2$ und $3b_2$ mit den an ihnen ausgebildeten Teilsegmenten $AF_1$ bis $AF_4$ des Innenloch-Profiles 14 um den zugehörigen Rotor herumgelegt und schalenartig geschlossen werden.

Anschließend werden noch die erforderlichen, vorzugsweise lösbaren Verbindungen der einzelnen Teilwerkstücke miteinander vorgenommen.

In den Fig. 7 und 8 ist ein Ausführungsbeispiel einer Wirbelmaschine 8 dargestellt, die in der Weise konstruiert und ausgebildet ist, daß mit Ihrer Hilfe eine zerspanende Bearbeitung von stangenartigen Werkstücken in Übereinstimmung mit dem erfindungsgemäßen Verfahren zum Herstellen von Statoren für Exzenterwellen-Pumpen oder -Motoren ermöglicht ist.

Es wird hierbei davon ausgegangen, daß ein langgestrecktes Werkstück $3''$ gemäß Fig. 6 mit zunächst kreisrundem Querschnitt bearbeitet werden soll. Statt dessen könnte es sich aber auch um Werkstücke 3 bzw. $3'$ gemäß Fig. 3 bzw. 4 handeln.

Die Wirbelmaschine 8 weist eine rotierbar gelagerte, mittels eines Motors 10 antreibbare Arbeitsspindel 9 auf, die zum koaxialen Aufspannen des Werkstücks $3''$ in einer vorgegebenen Relation zu einer Fräseinheit F dient.

Diese Fräseinheit F ist mit einem beispielsweise als Fingerfräser ausgebildeten Profilfräser 4 bestückt und wird von einem Längsschlitten 13 getragen.

Die Fräseinheit F mit Profilfräser 4 ist weiterhin mit einem Antriebsmotor 6 gekoppelt, durch den der Profilfräser 4 mit einer Drehzahl N in Rotation versetzbar ist, um das stangenartige Werkstück $3''$ zu bearbeiten.

Für den die Fräseinheit F tragenden Längsschlitten 13 ist weiterhin ein Vorschubmotor 11 vorgesehen, um Vorschubbewegungen V des Längsschlittens 13 relativ zur Arbeitsspindel 9 erzeugen zu können, außerdem ist der Längsschlitten 13 mit einem Verstellmotor 12 gekoppelt, durch welchen Querbewegungen Q des Längsschlittens 13 relativ zur Arbeitsspindel 9 bewirkt werden können.

Weiterhin ist noch ein mit einem Verstellschlitten 5 zusammenwirkender Verstellmotor 7 vorgesehen, welcher dazu dient, Höhenbewegungen H der auf den Verstellschlitten 5 montierten Fräseinheit F relativ zur Arbeitsspindel 9 zu hervorzurufen.

Die Arbeitsweise der Wirbelmaschine 8 gemäß Figuren 7 und 8 ist wie folgt:

Sobald das Werkstück $3''$ auf die Arbeitsspindel 9 aufgespannt ist, wird diese durch den Motor 10 in eine Rotation R versetzt, wobei die Rotationsgeschwindigkeit der Arbeitsspindel 9 genau auf die Vorschubbewegungen V des Längsschlittens 13 abstimmbar sind, welcher mittels des Vorschubmotors 11 in horizontaler Richtung bewegt wird. Um nun die Teilsegmente eines Innenlochprofiles in Form von äußeren Bearbeitungsflächen $AF_1$ bis $AF_4$ des Werkstückes $3''$ zu erzeugen, wie dies bereits im Vorangehenden erläutert ist, wird der vorzugweise als Fingerfräser ausgebildete Profilfräser 4 der Fräseinheit F in Funktion gesetzt und hierbei durch den Antriebsmotor 6 zu Rotationsbewegungen mit der Drehzahl N angetrieben.

Das Profil dieses Profilfräsers 4 ist mit den zu erzeugenden Profilflanken 15 des Innenlochprofils 14 des Stators 1 (vgl. Fig. 5) steigungsverzerrt ausgelegt.

Die zerspanende Bearbeitung des Werkstückes $3''$ erfolgt in der bereits im Vorangehenden erläuterten Art und Weise.

Insbesondere erfolgt hierbei eine Bearbeitung der äußeren Bearbeitungsflächen $AF_1$ bis $AF_4$ an dem Werkstück $3''$ mit einer fünffach überlagerten Relativbewegung zwischen dem Werkstück $3''$ und dem Profilfräser 4, wobei der mit der Drehzahl N rotierende Profilfräser 4 das Profil der Profilflanken 15 erzeugt. Die Entfernung der Profilflanken zur resultierenden Profillängsachse 2 ist durch einen konstanten Wert gekennzeichnet. Durch eine abgestimmte Rotation R der Arbeitsspindel 9 mit Werkstück $3''$ in Bezug auf die Höhenbewegungen H der Fräseinheit F sowie in Bezug auf die Querbewegungen Q und die Vorschubbewegungen V des Längsschlittens 13 werden somit die Teilsegmente des Innenlochprofiles 14 des Stators als äußere Bearbeitungsflächen erzeugt. Zur Steuerung der im Vorangehenden erläuterten Höhenbewegungen H, Querbewegungen Q und Vorschubbewegungen V sind im einzelnen nicht dargestellte Steuereinrichtungen vorgesehen, die mit dem Verstellmotor 7, dem Vorschubmotor 11 sowie mit dem Verstellmotor 12 zusammenwirken.

Die Rotation R der Arbeitsspindel 9, die Vorschubbewegung V des Längsschlittens 13 sowie die Querbewegung Q sind an sich übliche Funktionen einer Wirbelmaschine.

Gemäß einer Abwandlung der im Vorangehenden erläuterten Vorrichtung können aber auch zum Erzeugen der äußeren Bearbeitungsflächen an dem Werkstück $3''$ andere zerspanende Technologien, wie z. B. CNC-Fräsen eingesetzt werden, so daß beispielsweise auch die Wirbelmaschine 8 mit einer CNC-Fräseinheit ausgerüstet sein kann, wie dies im einzelnen in den Figuren 7 und 8 nicht dargestellt ist.

Es soll nochmals darauf hingewiesen werden, daß besonders vorteilhafte Eigenschaften durch die Erfindung bei der Herstellung von insbesondere langen Statoren mit unterschiedlicher Steigung erreicht werden können, wobei die einfache Möglichkeit gegeben ist, dies durch Änderungen der gesteuerten Bewegungsproportionen zu realisieren.

Im übrigen kann bei der Herstellung von mehrgängigen Statoren die Bearbeitung der Ausgangs-Werkstücke unter außerordentlich günstigen zerspantechnologischen Bedingungen durchgeführt werden.


BEZUGSZEICHENLISTE

1 Stator
2 Profillängsachse (von 1)
$2', 2''$ Längsachse (von 3, $3'$)
3 Werkstück (Fig. 3)
$3'$ Werkstück (Fig. 4)
$3''$ Werkstück (Fig. 6)
$3a_1$ Erstes Teilwerkstück (von 3)
$3b_1$ Zweites Teilwerkstück (von 3)
$3a_2$ Drittes Teilwerkstück (von $3'$)
$3b_2$ Viertes Teilwerkstück (von $3'$)
4 Profilfräser
5 Verstellschlitten (für Höhenbewegung H)
6 Antriebsmotor (für F bzw. 4)
7 Verstellmotor (für Höhenbewegung H)
8 Wirbelmaschine
9 Arbeitsspindel
10 Motor (für 9)
11 Vorschubmotor (für 13)
12 Verstellmotor (für Querbewegung Q)
13 Längsschlitten
14 Innenlochprofil (des Stators 1)
15 Profilflanke
L Länge des Statorprofils
S Steigung der Stator-Profilflanken (15)
$AF_1$ Erstes Teilsegment des Innenlochprofils 14
$AF_2$ Zweites Teilsegment des Innenlochprofils 14
$AF_3$ Drittes Teilsegment des Innenlochprofils 14
$AF_4$ Viertes Teilsegment des Innenlochprofils 14
$E_1$ Erste Ebene
$E'_1$ Zweite Ebene
$E_2$ Dritte Ebene
$E'_2$ Vierte Ebene
$T_1$ Erste Trennebene (am ersten Teilwerkstück $3a_1$)
$T_2$ Zweite Trennebene (am zweiten Teilwerkstück $3b_1$)
$T_3$ Dritte Trennebene (am dritten Teilwerkstück $3a_2$)
$T_4$ Vierte Trennebene (am vierten Teilwerkstück $3b_2$)
F Fräseinheit

V Vorschubbewegung (von 13)
N Drehzahl (des Profilfräsers 4)
R Rotation (der Arbeitsspindel 9 bzw. des Werkstücks 3)
H Höhenbewegung (von F)
Q Querbewegung
Pf Pfeil


## Ansprüche

1. Verfahren zum Herstellen von Statoren, insbesondere langgestreckten Statoren, für Exzenterwellen-Pumpen oder -Motoren mittels zerspanender Bearbeitung, wobei die Statoren in Richtung ihrer Längsachse jeweils mit einem zwei- oder mehrgängigen Innenlochprofil versehen werden, das sich periodisch wiederholende Profilflanken mit vorgegebener Steigung als innere Statorarbeitsflächen aufweist,
dadurch gekennzeichnet,
daß an stangenartigen Werkstücken (3; $3'$; $3''$) jeweils Teilsegmente des zu bildenden Innenlochprofils (14) des Stators (1) als äußere Bearbeitungsflächen ($AF_1$, $AF_2$, $AF_3$, $AF_4$) mittels zerspanender Bearbeitung erzeugt werden, daß die Werkstücke (3; $3'$; $3''$) sodann in Richtung ihrer Längsachsen jeweils in eine vorgegebene Anzahl von Teilwerkstücken ($3a_1$, $3b_1$; $3a_2$, $3b_2$) in der Weise zerteilt werden, daß jedes Teilwerkstück ein Teilsegment des Innenlochprofils (14) aufweist, und daß diese Teilwerkstücke ($3a_1$, $3b_1$; $3a_2$; $3b_2$) so zusammengesetzt werden, daß sich die Teilsegmente zu dem kompletten Innenlochprofil (14) ergänzen.

2. Verfahren nach Anspruch 1,
dadurch gekennzeichnet,
daß an je einem Werkstück (3; $3'$) wenigstens zwei Teilsegmente ($AF_1$, $AF_2$ bzw. $AF_3$, $AF_4$) des Innenlochprofils (14) erzeugt werden.

3. Verfahren nach Anspruch 1 oder 2,
dadurch gekennzeichnet,
daß Werkstücke (3; $3'$) mit jeweils quadratischem Querschnitt bearbeitet werden.

4. Verfahren nach Anspruch 3,
dadurch gekennzeichnet,
daß jeweils an einander diametral gegenüberliegenden Kantenbereichen des Werkstücks (3; $3'$) je ein Teilsegment ($AF_1$, $AF_2$, bzw. $AF_3$, $AF_4$) erzeugt wird.

5. Verfahren nach einem der vorhergehenden Ansprüche,
dadurch gekennzeichnet,
daß das Werkstück (3 bzw. $3'$) nach Maßgabe wenigstens einer entlang der Werkstücklängsachse verlaufenden Trennebene ($T_{1,2}$ bzw. $T_{3,4}$) zur Bildung von Teilwerkstücken ($3a_1$, $3b_1$ bzw. $3a_2$, $3b_2$) aufgeteilt wird.

6. Verfahren nach Anspruch 5,

dadurch gekennzeichnet,
daß als Trennebenen ($T_{1,2}$ bzw. $T_{3,4}$) diagonal verlaufende Ebenen zwischen Werkstücklängskanten dienen, an denen keine Teilsegmente erzeugt sind.

7. Verfahren nach einem der vorhergehenden Ansprüche,
gekennzeichnet durch
den Verfahrenschritt des derartigen Zusammensetzens der von einander getrennten Teilwerkstücke ($3a_1$, $3b_1$, $3a_2$, $3b_2$) zu einem kompletten Stator (1), daß die Ebenen ($E_1$, $E'_1$, $E_2$, $E'_2$ in denen die ursprünglichen Außenoberflächen des Werkstücks (3; 3') verlaufen, die Ebenen des gegenseitigen Zusammenfügens der Teilwerkstücke bilden, wobei sich sodann alle Ebenen ($E_1$, $E'_1$, $E_2$, $E'_2$) in der Profillängsachse (2) des resultierenden Innenlochprofils (14) des Stators (1) schneiden.

8. Verfahren nach Anspruch 1 oder 2,
dadurch gekennzeichnet,
daß Werkstücke ($3''$) mit jeweils kreisrundem oder quasi kreisrundem Querschnitt bearbeitet werden.

9. Verfahren nach Anspruch 8,
dadurch gekennzeichnet,
daß gleichzeitig mit der oder im Anschluß an die Erzeugung von Teilsegmenten ($AF_1$ bis $AF_4$) an dem Werkstück ($3''$) eine weitere abtragende Bearbeitung mit dem Ziel durchgeführt wird, die restlichen Außenoberflächen des Werkstücks ($3''$) plan auszubilden, so daß sie insbesondere entsprechend einem Werkstück mit ursprünglich quadratischem Querschnitt in Ebenen ($E_1$, $E'_1$, $E_2$, $E'_2$) liegen, und daß anschließend die weitere Werkstücksbearbeitung gemäß den Ansprüchen 5 - 7 erfolgt.

10. Verfahren nach einem der vorhergehenden Ansprüche,
dadurch gekennzeichnet,
daß zur Erzeugung der Teilsegmente in Form von äußeren Bearbeitungsflächen ($AF_1$ - $AF_4$) der Werkstücke (3; 3'; 3'') diese mittels eines Profilfräsers (4) einer Wirbelmaschine (8) bearbeitet werden.

11. Verfahren nach einem der Ansprüche 7 - 10,
dadurch gekennzeichnet,
daß die zur Bildung des kompletten Stators (1) mit Innenlochprofil (14) miteinander zusammengesetzten Teilwerkstücke ($3a_1$, $3b_1$; $3a_2$, $3b_2$) an den aneinander anliegenden Flächen, die durch die Ebenen ($E_1$, $E'_1$, $E_2$, $E'_2$) definiert sind, mechanisch miteinander verspannt werden, z. B. mit Hilfe von Positionierzapfen, und vorzugsweise lösbar miteinander verbunden werden, z. B. durch gegenseitiges Verschrauben.

12. Verfahren nach Anspruch 11,
dadurch gekennzeichnet,
daß nach dem Zusammensetzen von wenigstens zwei Teilwerkstücken (z. B. $3a_1$, $3b_1$) und zunächst unter Weglassung wenigstens eines weiteren bzw. eines dritten Teilwerkstücks (z. B. $3a_2$) die durch die Teilsegmente ($AF_1$, $AF_2$) gebildete und noch frei zugängliche, teilweise Statorarbeitsfläche (Rotor-Kontaktfläche) des Innenlochprofils (14) über ihre gesamte Länge nachbearbeitet wird (Oberflächen-Finish der inneren Statorarbeitsflächen).

13. Verfahren zum Herstellen von Exzenterwellen-Pumpen oder -Motoren unter Verwendung von Statoren, die gemäß einem der vorhergehenden Ansprüche hergestellt werden, und von entsprechenden, zwei- oder mehrgängigen Rotoren, vorzugsweise jeweils mit sich über deren Längserstreckung kontinuierlich ändernden Steigungen,
dadurch gekennzeichnet,
daß die einzelnen Teilwerkstücke ($3a_1$, $3b_1$; $3a_2$, $3b_2$) mit den an ihnen ausgebildeten Teilsegmenten ($AF_1$ bis $AF_4$) des resultierenden Innenlochprofils (14) des Stators (1) um den zugehörigen Rotor herum gelegt und schalenartig geschlossen werden und daß anschließend eine vorzugsweise lösbare Verbindung der Teilwerkstücke miteinander erfolgt.

14. Vorrichtung zum Herstellen von Statoren, insbesondere langgestreckten Statoren, für Exzenterwellen-Pumpen oder -Motoren mittels zerspanender Bearbeitung, wobei die Statoren in Richtung ihrer Längsachse jeweils mit einem zwei- oder mehrgängigen Innenlochprofil versehen werden, das sich periodisch wiederholende Profilflanken mit vorgegebener Steigung als innere Statorarbeitsflächen aufweist, insbesondere zur Durchführung des Verfahrens nach einem der Ansprüche 1 - 13,
gekennzeichnet durch die Kombination folgender Merkmale:

(a) Mittel zum Erzeugen einer vorgegebenen Anzahl von Teilsegmenten des zu bildenden Innenlochprofils (14) des Stators (1) als äußere Bearbeitungsflächen ($AF_1$, $AF_2$, $AF_3$, $AF_4$) an stangenartigen Werkstücken (3; 3';3'') mittels zerspanender Bearbeitung;

(b) Mittel zum anschließenden Zerteilen der bearbeiteten Werkstücke (3; 3'; 3'') in Richtung ihrer Längsachsen jeweils in eine vorgegebene Anzahl von Teilwerkstücken ($3a_1$, $3b_1$; $3a_2$, $3b_2$), derart, daß ein jedes Teilwerkstück ein Teilsegment des Innenlochprofils (14) des Stators (1) aufweist; und

(c) Mittel zu einem derartigen Zusammensetzen der Teilwerkstücke ($3a_1$, $3b_1$, $3a_2$, $3b_2$), daß sich die Teilsegmente zu dem kompletten Innenlochprofil (14) des Stators (1) ergänzen.

15. Vorrichtung nach Anspruch 14,
dadurch gekennzeichnet,
daß die Mittel gemäß Merkmal (a) im wesentlichen aus einer Wirbelmaschine (8) mit einer Fräseinheit (F) bestehen, die mit einem Profilfräser (4) zum Erzeugen der Teilsegmente in Form von äußeren Bearbeitungsflächen (AF$_1$ - AF$_4$) der Werkstücke (3; 3$'$; 3$''$) bestückt ist.

16. Vorrichtung nach Anspruch 15, dadurch gekennzeichnet, daß die Wirbelmaschine (8) im wesentlichen die folgenden Komponenten aufweist:
- Eine rotierbar gelagerte, motorisch antreibbare Arbeitsspindel (9) zum koaxialen Aufspannen eines Werkstücks (3$''$) in vorgegebener Relation zur Fräseinheit (F);
- einen die Fräseinheit (F) tragenden Längsschlitten (13);
- Mittel (11) zum Erzeugen von Vorschubbewegungen (V) des Längsschlittens (13) relativ zur Arbeitsspindel (9);
- Mittel (12) zum Erzeugen von Querbewegungen (Q) des Längsschlittens (13) relativ zur Arbeitsspindel (9);
- Mittel (7) zum Erzeugen von Höhenbewegungen (H) der Fräseinheit (F) relativ zur Arbeitsspindel (9).

17. Vorrichtung nach Anspruch 15 oder 16, dadurch gekennzeichnet, daß der Profilfräser (4) der Fräseinheit (F) als ein durch einen Antriebsmotor (6) in Rotation versetzbarer Fingerfräser ausgebildet ist.

18. Vorrichtung nach einem der Ansprüche 15 - 17, dadurch gekennzeichnet, daß das Profil des Profilfräsers (4) so ausgebildet ist, daß es mit den zu erzeugenden Profilflanken (15), d. h. den inneren Statorarbeitsflächen des resultierenden Innenlochprofils (14) des Stators (1) steigungsverzerrt ist.

19. Vorrichtung nach einem der Ansprüche 16 - 18, gekennzeichnet durch Mittel zum aufeinander abgestimmten Steuern der Rotationsbewegung (R) der Arbeitsspindel (9) mit Werkstück (3$''$), der Vorschubbewegungen (V) und Querbewegungen (Q) des Längsschlittens (13) und der Höhenbewegungen (H) der Fräseinheit (F).

20. Vorrichtung nach einem der Ansprüche 14 - 19, dadurch gekennzeichnet, daß die Mittel zum Erzeugen einer vorgegebenen Anzahl von Teilsegmenten des zu bildenden Innenlochprofils (14) des Stators (1) eine CNC-Fräseinheit aufweisen.

FIG. 1

FIG. 2

FIG. 3

FIG. 4

**FIG.5**

FIG.G

EP 0 380 771 A1

$Z_1$     $Z_2$

7

9

10

R

3″

13

V

8

**FIG. 7**

7

F

5

6

N

E1

E2′

3″

2

2

4

E1′

E2

R

H

12

Q

V

11

13

8

**FIG. 8**

**Europäisches Patentamt**

# EUROPÄISCHER RECHERCHENBERICHT

Nummer der Anmeldung

EP 89121068.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - A1 - 2 327 684</u><br>(BERNA AG)<br>    * Patentanspruch 1, Seite 4,<br>    2. Absatz, Zeile 1-8, Fig.<br>    1-5 *<br>    -- | 1 | B 23 P 13/00<br>B 23 G  1/34 |
| A | <u>DE - C - 2 423 785</u><br>(WERNER & PFLEIDERER)<br>    * Spalte 6, vorletzter<br>    Absatz; Spalte 7, 2. Absatz;<br>    3. Absatz; Spalte 6, letzter<br>    Absatz, Fig. 3,5,6 *<br>    -- | 2,8,9,<br>11 | |
| A | <u>CH - A - 444 677</u><br>(STREICHER, SEIDL)<br>    * Patentanspruch, Unteran-<br>    spruch 1, Fig. 2,3 *<br>    -- | 13,14 | |
| A | <u>DE - A1 - 3 721 732</u><br>(GWT)<br>    * Anspruch 1,11,12,16 *<br>    -- | 14,15,<br>16,19,<br>20 | RECHERCHIERTE SACHGEBIETE (Int Cl⁵) |
| A | DUBLEL TASCHENBUCH F.<br>MASCHINENBAU, 14. Auflage,<br>SPRINGERVERLAG, Berlin,<br>Heidelberg, 1981, Seiten<br>1056,1057<br>    * Seiten 1056,1057; Bild 28 *<br>    ---- | 10,17,<br>18 | |

Der vorliegende Recherchenbericht wurde für alle Patentansprüche erstellt.

| Recherchenort | Abschlußdatum der Recherche | Prüfer |
|---|---|---|
| WIEN | 22-03-1990 | BISTRICH |